(19) Europäisches Patentamt
European Patent Office
Office européen des brevets

(11) EP 1 666 219 B1

(12) **EUROPEAN PATENT SPECIFICATION**

(45) Date of publication and mention of the grant of the patent:
**13.08.2008 Bulletin 2008/33**

(51) Int Cl.:
***B27K 3/50*** *(2006.01)* ***B27K 3/34*** *(2006.01)*
***B05D 7/06*** *(2006.01)* ***C08L 83/04*** *(2006.01)*

(21) Application number: **05257266.6**

(22) Date of filing: **25.11.2005**

(54) **Wood modified with silicone emulsion composition**

Holz modifiziert mit einer Emulsion einer Silikonmischung

Bois modifié par une compostion silicone en émulsion

(84) Designated Contracting States:
**DE FR GB**

(30) Priority: **06.12.2004 JP 2004352717**

(43) Date of publication of application:
**07.06.2006 Bulletin 2006/23**

(73) Proprietor: **Shin-Etsu Chemical Co., Ltd.**
**Chiyoda-ku, Tokyo (JP)**

(72) Inventor: **Matsumura, K.c/o Silicone-E. Materials Research C.**
**Matsuida-machi,**
**Usui-gun, Gunma-ken (JP)**

(74) Representative: **Stoner, Gerard Patrick et al**
**Mewburn Ellis LLP**
**York House**
**23 Kingsway**
**London WC2B 6HP (GB)**

(56) References cited:
**EP-A- 0 457 616** **EP-A- 0 780 421**
**EP-A- 0 908 498** **US-A- 4 496 687**
**US-A1- 2004 062 872**

- **DATABASE WPI Section Ch, Week 200132 Derwent Publications Ltd., London, GB; Class A26, AN 2001-304101 XP002369362 & JP 2001 055510 A (SHINETSU CHEM IND CO LTD) 27 February 2001 (2001-02-27)**
- **PATENT ABSTRACTS OF JAPAN vol. 2002, no. 06, 4 June 2002 (2002-06-04) & JP 2002 038015 A (SHIN ETSU CHEM CO LTD), 6 February 2002 (2002-02-06)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### TECHNICAL FIELD

This invention relates to modified wood in which wood is coated or impregnated with a silicone emulsion composition which crosslinks to forms a rubbery coating, so as to achieve improvements in water absorption prevention, dimensional stability, and the leachability in water of chemicals (e.g., flame retardants, antibacterial agents, mildew-proofing agents, termite-controlling agents) with which wood has been impregnated, without detracting from wooden quality.

### BACKGROUND

While wood is widely utilized as building materials, crafted products and the like, it is a common practice that wood is coated or impregnated with various treating agents such as high-molecular weight compounds, low-molecular weight compounds, chemical agents and inorganic materials for the purpose of improving wood properties such as dimensional stability, and resistances to water, staining, fire, rotting, crazing and wear.

Among these agents, many attempts have been made to apply to wood the silicones which have been proven effective as modifiers for paints and resins with respect to water repellence and resistance to staining. For example, JP-A 56-4408 discloses a method of coating a surface of wood with a composition comprising 100 pbw of a silicone diol having a relatively high viscosity and 0.1 to 50 pbw of a crosslinker, followed by curing. This method, however, detracts from the wooden quality on the wood surface, and has the drawback common to paints that the effect of protecting the wood interior disappears if the surface coating receives even a few flaws in the course of actual use of wood in various applications. When the above treatment is performed on the wood which has been internally impregnated with inorganic salts of phosphoric or boric acid serving as flame retardants or termite-controlling agents, undesirably the coating permits the inorganic salts to be readily leached out in rain water or the like.

Intending to apply the sol-gel method using silicon alkoxide to wood, JP-A 63-265601 discloses a method of preparing a modified wood by forming a silicone polymer within cell walls of wood. This method capable of forming a silicone polymer within wood has advantages that the wooden quality on the surface is not compromised and the effect lasts even after the wood surface flaws. However, catalysts such as hydrochloric acid or organometallic compounds must be used to promote curing because of the low reactivity of monomers, leaving the problems that preparation requires cumbersome operation and costs and the wood itself can be degraded by the catalyst.

Additionally, the silicone polymer forms via catalytic reaction while filling wood cell cavities therewith. Then it is effective for prohibiting water absorption to some extent, but less effective for improving dimensional stability.

Beside the silicone, SBR latex is coated to wood surface as the anti-crazing agent as disclosed in JP-A 54-110234. Due to poor stability over time, the latex coating degrades upon outdoor exposure, failing to prevent the chemical agents from being leached out.

As the anti-crazing paint for wood, JP-A 60-255866 describes a coating composition comprising an SBR or NBR latex and a polyalkylene oxide group-containing compound, which is coated to wood surface. The polyalkylene oxide group-containing compound is hydrophilic so that it is leached out upon exposure to weather over time, and the effect does not last.

JP-A 55-118044 discloses a wood treating composition having a low-volatile oligomer emulsified in water. JP-A 5-69412 discloses a wood treating composition comprising a water-soluble modifier and an emulsion. Both the low-volatile oligomer and the water-soluble modifier are hydrophilic compounds which can be leached out with the lapse of time, failing to maintain the desired effect. JP-A 4-307204 discloses a wood processing composition comprising a water-soluble filling/curing agent which cures after having penetrated into wood so that it prevents chemical agents from being leached out and restrains the wood from shrinkage. The water-soluble filling/curing agent comprising volatile reagents such as urea and formalin requires careful management of the working environment, and the effect of preventing leaching-out is insufficient due to water solubility.

Another approach is to substitute a water-soluble solvent such as polyethylene glycol for the bound water in cell membranes. However, the solvent once substituted will be leached out over time due to its water solubility.

An object of the present invention is to provide a modified wood featuring water absorption prevention, dimensional stability, and minimized leach-out of impregnated chemical agents.

The inventors have found that when wood is coated or impregnated with a silicone emulsion composition comprising the following components (A) to (E) emulsified and dispersed in water in the presence of a surfactant, which composition crosslinks to form a rubbery coating, a modified wood featuring water absorption prevention, dimensional stability, and minimized leach-out of impregnated chemical agents can be obtained in a simple manner at low costs.

The invention provides a modified wood in which wood is coated, impregnated or otherwise treated with a silicone emulsion composition comprising the following components (A) to (E) emulsified and dispersed in water in the

presence of a surfactant,

(A) 100 parts by weight of an organopolysiloxane having at least two silicon-bonded hydroxyl groups on the molecule,
(B) 0.5 to 20 parts by weight of the reaction product of an amino-containing organoalkoxysilane and an acid anhydride,
(C) 0 to 20 parts by weight of an epoxy-containing organoalkoxysilane and/or a partial hydrolyzate thereof,
(D) 0 to 50 parts by weight of colloidal silica and/or polysilsesquioxane, and
(E) 0 to 10 parts by weight of a curing catalyst.

The wood has been internally or surface treated with at least one member selected from among a flame retardant, antibacterial agent, mildew-proofing agent, termite-controlling agent, water repellent and paint, prior to the treatment with the silicone emulsion composition. The flame retardant, antibacterial agent, mildew-proofing agent or termite-controlling agent is typically a boron compound or phosphorus compound.

When wood is treated with the silicone emulsion composition according to the invention, the modified wood has resistance to water absorption and dimensional stability and is effective for preventing the chemical agents, with which the wood has been impregnated, from being leached out.

As used herein, the notation ($C_n$-$C_m$) means a group containing from n to m carbon atoms per group. All parts are by weight unless otherwise stated.

The treatment method is an aspect of the invention.

<u>FURTHER EXPLANATIONS; OPTIONS AND PREFERENCES</u>

The modified wood of the invention is obtained by coating or impregnating wood with a silicone emulsion composition comprising the following components (A) to (E) which are emulsified and dispersed in water in the presence of a surfactant. The respective components are described in detail.

Component (A) is an organopolysiloxane having at least two silicon-bonded hydroxyl groups on the molecule. The preferred organopolysiloxane has the general formula (1).

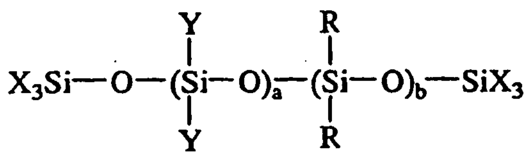

(1)

Herein R which may be the same or different is a $C_1$-$C_{20}$ alkyl group or $C_6$-$C_{20}$ aryl group; X which may be the same or different is a $C_1$-$C_{20}$ alkyl group, $C_6$-$C_{20}$ aryl group, $C_1$-$C_{20}$ alkoxy group or hydroxyl group; Y which may be the same or different is X or a group $-[O\text{-}Si(X)_2]_c\text{-}X$, the subscript a is a number of 0 to 1,000, b is a positive number of 100 to 10,000, and c is a positive number of 1 to 1,000. This organopolysiloxane should have at least two silicon-bonded hydroxyl groups on the molecule.

More particularly, in formula (1), R is each independently selected from $C_1$-$C_{20}$ alkyl groups and $C_6$-$C_{20}$ aryl groups, such as methyl, ethyl, propyl, butyl, pentyl, hexyl, heptyl, octyl, nonyl, decyl, dodecyl, tetradecyl, hexadecyl, octadecyl, cyclopentyl, cyclohexyl, cycloheptyl, phenyl, tolyl, and naphthyl, with methyl being preferred. X is each independently selected from $C_1$-$C_{20}$ alkyl groups, $C_6$-$C_{20}$ aryl groups, $C_1$-$C_{20}$ alkoxy groups and hydroxyl groups, such as methyl, ethyl, propyl, butyl, pentyl, hexyl, heptyl, octyl, nonyl, decyl, dodecyl, tetradecyl, hexadecyl, octadecyl, cyclopentyl, cyclohexyl, cycloheptyl, phenyl, tolyl, naphthyl, methoxy, ethoxy, propoxy, butoxy, hexyloxy, heptyloxy, octyloxy, decyloxy, and tetradecyloxy as well as hydroxyl. It is preferred that one of the three X's at each end be hydroxyl. Y is each independently selected from X and groups $-[O\text{-}Si(X)_2]_c\text{-}X$ wherein c is a positive number of 1 to 1,000. If "a" is more than 1,000, the resulting coating has insufficient strength. Thus "a" is a number of 0 to 1,000, preferably 0 to 200. If b is less than 100, the resulting coating becomes less flexible. If b is more than 10,000, the resulting coating has reduced tear strength. Thus b is a positive number of 100 to 10,000, preferably 1,000 to 5,000. For crosslinking, at least two silicon-bonded hydroxyl groups must be included on the molecule.

Illustrative examples of the organopolysiloxane are given below.

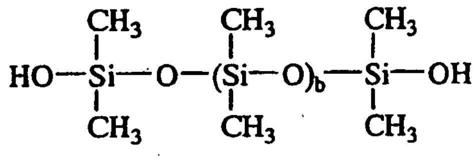

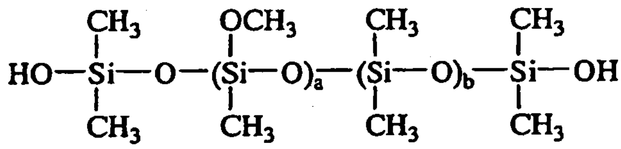

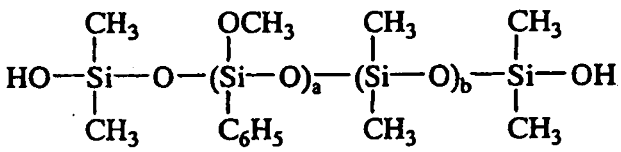

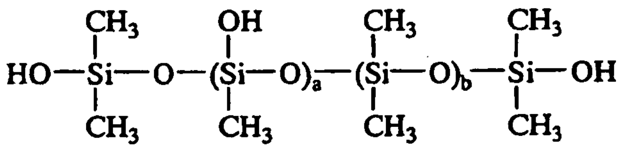

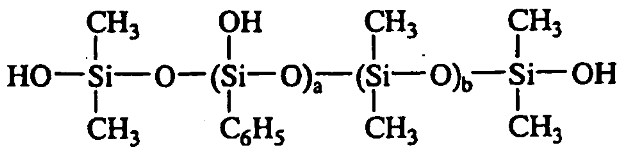

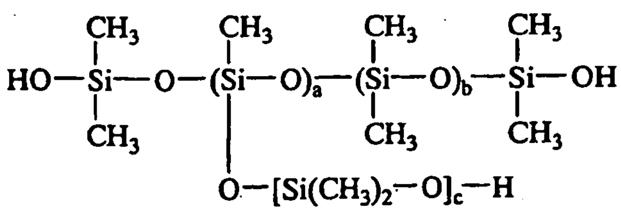

Herein, a, b and c are as defined above.

Such organopolysiloxane can be synthesized by well-known methods. For example, it is obtained through equilibration reaction between a cyclic siloxane such as octamethylcyclotetrasiloxane and an α,ω-dihydroxysiloxane oligomer in the presence of a catalyst such as a metal hydroxide. Since component (A) is preferably used in emulsion form, it may be prepared as an emulsion by a well-known emulsion polymerization method. Thus it may be readily synthesized by previously emulsifying and dispersing a cyclic siloxane or an α,ω-dihydroxysiloxane oligomer, an α,ω-dialkoxysiloxane oligomer, alkoxysilane or the like in water using an anionic or cationic surfactant, optionally adding a catalyst such as an acid or basic material, and effecting polymerization reaction.

Component (B) is the reaction product of an amino-containing organoalkoxysilane and an acid anhydride, which serves to improve the adhesion of a silicone coating to the substrate or wood. The product is obtained by reacting an amino-containing organoalkoxysilane with a dicarboxylic acid anhydride. The amino-containing organoalkoxysilane as one reactant may have the general formula (2).

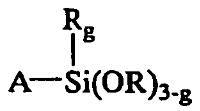

**(2)**

Herein R is as defined above, A is an amino-containing group of the formula $-R^1(NHR^1)_hNHR^2$ wherein $R^1$ is each independently a divalent hydrocarbon group such as $C_1$-$C_6$ alkylene, $R^2$ is R or hydrogen, h is an integer of 0 to 6, and g is 0, 1 or 2. Illustrative examples of the amino-containing organoalkoxysilane are given below.

$(C_2H_5O)_3SiC_3H_6NH_2$

$(C_2H_5O)_2\ (CH_3)\ SiC_3H_6NH_2$

$(CH_3O)_3SiC_3H_6NH_2$

$(CH_3O)_2(CH_3)SiC_3H_6NH_2$

$(CH_3O)_3SiC_3H_6NHC_2H_4NH_2$

$(CH_3O)_2(CH_3)\ SiC_3H_6NHC_2H_4NH_2$

Examples of the dicarboxylic anhydride for reaction with the amino-containing organoalkoxysilane include maleic anhydride, phthalic anhydride, succinic anhydride, methylsuccinic anhydride, glutaric anhydride, and itaconic anhydride, with maleic anhydride being preferred. The reaction is performed simply by mixing the reactants e.g. in such amounts that a molar ratio of amino groups to acid anhydride is 0.5-2:1, optionally in a hydrophilic organic solvent, at room temperature or elevated temperature. Suitable hydrophilic organic solvents, if used, include alcohols such as methanol, ethanol, isopropanol and butanol, ketones such as acetone and methyl ethyl ketone, acetonitrile, and tetrahydrofuran.

An appropriate amount of component (B) is 0.5 to 20 parts by weight per 100 parts by weight of component (A). Less than 0.5 part of component (B) fails to improve the adhesion to wood whereas more than 20 parts of component (B) makes the coating hard and brittle. The preferred amount of component (B) is 1 to 10 parts by weight.

Component (C) is an epoxy-containing organoalkoxysilane and/or a partial hydrolyzate thereof, which serves to improve the adhesion of a silicone coating to the substrate or wood. Examples include
γ -glycidoxypropyltrimethoxysilane,
γ -glycidoxypropyldimethoxymethylsilane,
β -(3,4-epoxycyclohexyl)ethyltrimethoxysilane, and
β -(3,4-epoxycyclohexyl)ethyldimethoxymethylsilane. Partial hydrolyzates of these silanes are also included.

An appropriate amount of component (C) is 0 to 20 parts by weight per 100 parts by weight of component (A). More than 20 parts of component (C) makes the coating hard and brittle. The preferred amount of component (C) is 0 to 10 parts by weight. When used, the amount of component (C) is preferably at least 0.5 part, more preferably at least 1 part by weight.

Component (D) is colloidal silica and/or polysilsesquioxane, which serves as a coating reinforcement. Examples include colloidal silica and polymethylsilsesquioxane which is a hydrolytic condensate of trimethoxymethylsilane.

Some colloidal silicas which can be used herein are commercially available. While the type is not critical, those colloidal silicas stabilized with sodium, ammonium or aluminum and having a particle size of 5 to 50 nm are preferable. Suitable commercial examples include Snowtex by Nissan Chemical Industries, Ltd., Ludox by Dupont, Silicadol by Nippon Chemical Industrial Co., Ltd., Adelite AT by Asahi Denka Co., Ltd., and Cataloid S by Catalysts & Chemicals Industries Co., Ltd.

Polymethylsilsesquioxane is obtained by adding an acid such as sulfuric acid or a basic compound such as potassium hydroxide as a condensation catalyst to an aqueous solution of a surfactant, adding dropwise trimethoxymethylsilane thereto, and stirring the mixture, thereby yielding an emulsion of polymethylsilsesquioxane. In this reaction, it is acceptable to add an alkoxytrialkylsilane, dialkoxydialkylsilane, tetraalkoxysilane or the like for adjusting the degree of

crosslinking of polysilsesquioxane. It is also acceptable to add a vinylsilane, epoxysilane, acrylic silane, methacrylic silane or the like for enhancing the reactivity of polysilsesquioxane.

An appropriate amount of component (D) is 0 to 50 parts by weight per 100 parts by weight of component (A). More than 50 parts of component (D) makes the silicone coating hard and brittle. The preferred amount of component (D) is 0 to 30 parts by weight. When used, the amount of component (D) is preferably at least 1 part by weight, more preferably at least 3 parts by weight. Also preferably component (D) has an average particle size of 2 to 200 nm.

Component (E) is a curing catalyst for inducing condensation reaction of the components of the composition for achieving quick crosslinking and curing. Suitable catalysts include metal salts of organic acids such as dibutyltin dilaurate, dibutyltin dioctate, dioctyltin dilaurate, dioctyltin diversatate, dioctyltin diacetate, dibutyltin bisoleylmaleate, tin octylate, zinc stearate, zinc octylate, zinc acetate and iron octylate; and amine compounds such as n-hexylamine and guanidine. These curing catalysts except water-soluble ones are desirably emulsified and dispersed in water with the aid of surfactants to form emulsions, prior to use.

An appropriate amount of component (E) is 0 to 10 parts by weight per 100 parts by weight of component (A). If more than 10 parts of the catalyst is used, a portion thereof can be left in the coating as non-volatile matter and adversely affect the coating properties. The preferred amount of component (E) is 0 to 5 parts by weight. When used, the amount of component (E) is preferably at least 0.5 part by weight, more preferably at least 1 part by weight.

In the emulsion composition thus formulated, silane coupling agents, silicone resins, silicone oils, or powdered silicone resins may be added and compounded, if desired, for further improving the properties of a coating thereof, as long as the objects of the invention are not compromised. Suitable silane coupling agents include various silanes having acryloxy, methacryloxy, mercapto, carboxyl and cyano groups. Suitable silicone resins are trialkylsiloxypolysilicates. Suitable silicone oils include $\alpha,\omega$-dihydroxyalkylpolysiloxanes and alkylpolysiloxanes. Suitable powdered silicone resins include silicone resin powder and silicone rubber powder.

Similarly, various other additives may be compounded if desired, such as, for example, thickeners, pigments, dyes, penetrants, antistatic agents, antifoaming agents, preservatives, flame retardants, antibacterial agents, termite-controlling agents, and water repellents.

The wood which can be treated with the silicone emulsion composition of the invention is not particularly limited and encompasses a variety of woods including solid wood, plywood, laminated veneer lumbers (LVL), particle boards, and processed woods such as incombustible wood and termite-controlled wood in which wood is impregnated or coated with one or more of preservatives, flame retardants, antibacterial agents, termite-controlling agents and water repellents. The invention is applicable particularly to wood members impregnated with boron compounds or phosphorus compounds. The prior treatment with such material may be part of the present method.

Suitable boron compounds include boric acid, borax, borates such as Tim-bor® ($Na_2B_8O_{13}\cdot 4H_2O$) available from U.S. Borax Inc., and trialkyl borates such as trimethyl borate, triethyl borate, tripropyl borate and tributyl borate. Suitable phosphorus compounds include phosphates such as triammonium phosphate, diammonium hydrogen phosphate, monoammonium dihydrogen phosphate, ammonium polyphosphate, sodium phosphate, disodium hydrogen phosphate, sodium dihydrogen phosphate, and sodium polyphosphate; phosphorous acid, and trialkyl phosphites such as trimethyl phosphite, triethyl phosphite, tripropyl phosphite, and tributyl phosphite; phosphoric acid and trialkyl phosphates such as trimethyl phosphate, triethyl phosphate, tripropyl phosphate, and tributyl phosphate.

A coating of such silicone emulsion composition has been found effective for preventing water absorption and has a good ability to follow the substrate due to rubbery quality, suggesting that it is unsusceptible to cracking. When wood which has been impregnated with a flame retardant and/or termite-controlling agent etc. is coated with the emulsion composition, the resultant coating can impart the effect of preventing such chemicals from being leached out in water, typically rain water.

The method of applying the silicone emulsion composition of the invention is not critical, and any of well-known methods such as roll coating, spray coating and dip coating may be employed. Once the silicone emulsion composition is applied, it is dried at normal temperature, forming a cured coating. The processing time can be reduced by heating for promoting the cure. The cured coating has rubbery quality.

The amount of the silicone emulsion composition with which wood is treated according to the invention may be determined as appropriate although the amount of the emulsion coated is preferably 1 to 100 kg of solids per cubic meters of wood, more preferably 10 to 30 kg/$m^3$. For ease of application and the like, the silicone emulsion composition should preferably have a viscosity of 1 to 1,000 Pa·s, more preferably 1 to 100 Pa·s, as measured by a rotational viscometer at 25°C. It is understood that the viscosity can be adjusted, if desired, by adding a thickener.

## EXAMPLE

Preparation Examples, Examples and Comparative Examples are given below for further illustrating the present invention. These examples should not be construed as limiting the invention. Unless otherwise stated, % is by weight.

Preparation Example 1

A 2-L polyethylene beaker was charged with 498 g of octamethylcyclotetrasiloxane, 2 g of triethoxyphenylsilane, 50 g of 10% sodium laurylsulfate aqueous solution and 50 g of 10% dodecylbenzenesulfonate aqueous solution, which were homogeneously emulsified using a homomixer. Water, 400 g, was slowly added for dilution, and the diluted liquid passed twice through a high-pressure homogenizer under a pressure of 300 kg/cm$^2$, yielding a homogeneous white emulsion. This emulsion was transferred to a 2-L glass flask equipped with a stirrer, thermometer and reflux condenser, where it was subjected to polymerization reaction at 50°C for 24 hours, and aging at 10°C for 24 hours. This was followed by neutralization to pH 6.2 with 12 g of 10% sodium carbonate aqueous solution. The emulsion thus obtained had a nonvolatile content of 45.4% upon drying at 105°C for 3 hours, and contained a non-flowing, soft gel-like organopolysiloxane having an average composition represented by $[(CH_3)_2SiO_{2/2}]/[(C_6H_5)SiO_{3/2}]$ = 100/0.1 (molar ratio) and end-capped with hydroxyl groups. In this way, an emulsion [A-1] containing 44.4% component (A) was obtained.

Preparation Example 2

A 2-L polyethylene beaker was charged with 500 g of octamethylcyclotetrasiloxane, 50 g of 10% sodium laurylsulfate aqueous solution and 50 g of 10% dodecylbenzenesulfonate aqueous solution, which were homogeneously emulsified using a homomixer. Water, 400 g, was slowly added for dilution, and the diluted liquid passed twice through a high-pressure homogenizer under a pressure of 300 kg/cm$^2$, yielding a homogeneous white emulsion. This emulsion was transferred to a 2-L glass flask equipped with a stirrer, thermometer and reflux condenser, where it was subjected to polymerization reaction at 50°C for 24 hours, and aging at 10°C for 24 hours. This was followed by neutralization to pH 6.2 with 12 g of 10% sodium carbonate aqueous solution. The emulsion thus obtained had a nonvolatile content of 45.5% upon drying at 105°C for 3 hours, and contained a gum-like organopolysiloxane of the formula $HO-[(CH_3)_2SiO]_n-H$ having a viscosity of at least 1,000 Pa·s at 25°C. In this way, an emulsion [A-2] containing 44.5% component (A) was obtained.

Preparation Example 3

Maleic anhydride, 154 g, was dissolved in 500 g of ethanol, after which 346 g of 3-aminopropyltriethoxysilane was added dropwise at room temperature over one hour. Reaction was performed under ethanol reflux at 80°C for 24 hours, yielding a pale yellow clear solution [B-1] containing 50% of component (B). This solution had a nonvolatile content of 45.1% upon drying at 105°C for 3 hours. The reaction product in the solution consisted of about 60% of a mixture of $(C_2H_5O)_3SiC_3H_6$-NHCO-CH=CHCOOH and $(C_2H_5O)_3SiC_3H_6NH_3^{+-}OCOCH=CHCOOC_2H_5$ and the remainder (about 40%) of oligomers derived therefrom, as analyzed by IR, GC, NMR and GCMS.

Preparation Example 4

A 2-L polyethylene beaker was charged with 300 g of dioctyltin dilaurate and 50 g of polyoxyethylene nonyl phenyl ether (EO 10 mole addition product), which were homogeneously mixed using a homomixer. Water, 650 g, was slowly added for achieving emulsion dispersion in water, and the dispersion passed twice through a high-pressure homogenizer under a pressure of 300 kg/cm$^2$, yielding an emulsion [E-1] containing 30% of component (E).

A series of silicone emulsion compositions #1 to #7 were prepared by blending components (A) to (E) in accordance with the formulation shown in Table 1. Note that γ-glycidoxypropyltrimethoxysilane [C-1] and colloidal silica (Snowtex C by Nissan Chemical Industries, Ltd., active ingredient 20%) [D-1] were used as components (C) and (D), respectively. With stirring, 4 g of carboxymethyl cellulose (Cellogen F-SA by Dai-Ichi Kogyo Seiyaku Co., Ltd.) was added to 500 g of the silicone emulsion compositions for adjusting to a viscosity of 15 Pa·s at 25°C.

Table 1: Mixing formulation

| (unit: pbw) | | Silicone emulsion composition | | | | | | |
|---|---|---|---|---|---|---|---|---|
| | | #1 | #2 | #3 | #4 | #5 | #6 | #7 |
| Component A | A-1 | 100 | - | 100 | 100 | - | 100 | - |
| | A-2 | - | 100 | - | - | 100 | - | 100 |
| Component B | B-1 | 5 | 8 | 10 | 20 | 0.5 | 0.5 | 5 |
| Component C | C-1 | 5 | 8 | - | - | 20 | 2 | 5 |

(continued)

| (unit: pbw) | | Silicone emulsion composition | | | | | | |
|---|---|---|---|---|---|---|---|---|
| | | #1 | #2 | #3 | #4 | #5 | #6 | #7 |
| Component D | D-1 | 15 | - | 10 | - | - | 50 | 15 |
| Component E | E-1 | 1 | 0.5 | 1 | 1 | 1 | - | 0.1 |

Example 1

Silicone emulsion composition #1 was diluted with water to an active ingredient content of 20%, which was a treating liquid.

Three cedar sap wood pieces (air dried) of 1.4 cm x 3 cm x 3 cm (butt end 1.4 x 3 cm) were dipped in the treating liquid at normal temperature and atmospheric pressure for 10 minutes and dried at 25°C for 7 days, obtaining modified wood pieces. A water absorption test was carried out on these samples as follows. The results are shown in Table 2.

Water absorption test

The samples were entirely immersed in water for 24 hours, after which they were taken out and weighed. A percent water absorption was calculated according to the equation:

$$\%\ \text{water absorption} = [(W-W0)/W0] \times 100$$

wherein W0 is the weight of the sample before water immersion and W is the weight of the sample immediately after water immersion. An average of three samples was reported.

Examples 2 to 7

Using silicone emulsion compositions #2 to #7, a water absorption test was carried out as in Example 1. The results are shown in Table 2.

Comparative Example 1

Using untreated cedar sap wood pieces of the same size as in Example 1, a water absorption test was carried out as in Example 1. The results are shown in Table 2.

Comparative Example 2

With stirring, 2 g of 0.1N hydrochloric acid and 35 g of water were added to a liquid mixture of 75 g of methyltrimethoxysilane, 20 g of tetraethoxysilane, 5 g of dimethyldimethoxysilane, 100 g of isopropanol and 0.05 g of zirconocene dichloride. The mixture was stirred for 3 hours and then allowed to stand for 8 hours. Wood pieces were treated as in Example 1 with the thus obtained liquid, designated silane treating liquid #1. On the resulting samples, a water absorption test was carried out as in Example 1. The results are shown in Table 2.

Comparative Example 3

To 100 g of α,ω-dihydroxypoly(dimethylsiloxane) having a viscosity of 50,000 mPa·s at room temperature was added an equal volume of xylene. The siloxane was thoroughly dissolved. Then 4 g of a partial hydrolytic condensate of methyltriacetoxysilane and 0.01 g of dibutyltin dilaurate were added to the solution, which was thoroughly mixed under moisture-proof conditions. Wood pieces were treated as in Example 1 with the thus obtained liquid, designated silane treating liquid #2. On the resulting samples, a water absorption test was carried out as in Example 1. The results are shown in Table 2.

Comparative Example 4

A reactor equipped with a stirring impeller, thermometer, reflux condenser and dropping funnel was charged with 2.0 g of a reactive emulsifier (Adeka Reasoap SE-10N, Asahi Denka Co., Ltd.) and 342.1 g of water and heated to a temperature of 75°C. An emulsion was prepared by adding 2.0 g of a reactive emulsifier (Adeka Reasoap SE-10N, Asahi Denka Co., Ltd.) to 244.5 g of water, dissolving the emulsifier, further adding a mixture of unsaturated monomers: 230 g of 2-ethylhexyl acrylate, 230 g of styrene, 19 g of glycidyl methacrylate, and 12.5 g of methacrylic acid, and stirring the contents for emulsification. This emulsion was charged to the dropping funnel. A 5% portion of this monomer mixture emulsion was transferred to the reactor, and 0.5 g of potassium persulfate added as a polymerization initiator, after which the reactor was heated to 80°C and held for 10 minutes. Thereafter, the remainder of the monomer mixture emulsion and 50.0 g of 3% potassium persulfate were evenly added dropwise to the reactor over 3 hours. After the completion of addition, the mixture was held at 80°C for one hour for maturing reaction. It was cooled to room temperature and neutralized with 3.5 g of aqueous ammonia. There was obtained Emulsion #1 having a solid concentration of 45%. It was diluted with water to a solid concentration of 20%. Wood pieces were treated as in Example 1 with the thus obtained liquid. On the resulting samples, a water absorption test was carried out as in Example 1. The results are shown in Table 2.

Table 2: % water absorption after 24-hour immersion

| | Water absorption (%) |
|---|---|
| Example 1 | 12 |
| Example 2 | 11 |
| Example 3 | 13 |
| Example 4 | 15 |
| Example 5 | 16 |
| Example 6 | 15 |
| Example 7 | 14 |
| Comparative Example 1 | 123 |
| Comparative Example 2 | 99 |
| Comparative Example 3 | 100 |
| Comparative Example 4 | 85 |

Example 8

Silicone emulsion composition #1 was diluted with water to an active ingredient content of 20%, which was a treating liquid.

Nine cedar sap wood pieces having a butt section of 20 mm × 20 mm and a height of 10 mm with opposed sides of straight grain, which had been impregnated with 5 kg/m$^3$ of borate $Na_2B_8O_{13} \cdot 4H_2O$, were dipped in the treating liquid at normal temperature and atmospheric pressure for 10 minutes and dried at 25°C for 7 days, obtaining modified wood pieces.

A leach-out test was carried out on these samples according to JIS K1571. The amount of residual borate was determined by measuring the amount of boron in the samples after the test by the following procedure. The results are shown in Table 3.

Leach-out test

A set of nine wood samples was placed in a 500-ml beaker, to which deionized water in a volume which was 10 times the volume of the samples was poured so that the samples were submerged under the water surface. By installing a magnetic stirrer and rotating the stir bar at 400-450 rpm, the water was stirred at a temperature of 25°C for 8 hours for leaching out the chemical. Immediately thereafter, the samples were taken out and lightly drained of water from the surface. Subsequently, the samples were held in an air circulating dryer at a temperature of 60°C for 16 hours, allowing the volatiles to volatilize off. The foregoing procedure was repeated ten times.

Measurement of residual borate in sample

The wood sample was placed in a Teflon® beaker, which received 50 ml of 3% aqueous nitric acid and was heated on a hot plate at 200°C for 2 hours. The beaker was cooled down, after which water was added to a constant volume of 50 ml. This procedure was repeated five times. At the end of every procedure, the amount of boron was measured by an ICP analyzer. The total of these amounts is the amount of residual borate in the wood sample. The result is an average of nine samples.

Examples 9 to 14

The leach-out test and the residual borate measurement were carried out as in Example 8 using silicone emulsion compositions #2 to #7. The results are shown in Table 3.

Comparative Examples 5 to 8

The leach-out test and the residual borate measurement were carried out as in Example 8 using borate-impregnated wood pieces which had not been treated or had been treated with silane treating liquids #1 and #2 and Emulsion #1. The results are shown in Table 3.

Table 3

| | Amount of residual borate (kg/m$^3$) |
|---|---|
| Example 8 | 2.5 |
| Example 9 | 2.7 |
| Example 10 | 2.1 |
| Example 11 | 2.2 |
| Example 12 | 2.3 |
| Example 13 | 2.2 |
| Example 14 | 2.2 |
| Comparative Example 5 | 0.01 |
| Comparative Example 6 | 0.5 |
| Comparative Example 7 | 0.01 |
| Comparative Example 8 | 0.03 |

## Claims

1. A modified wood, which has been internally or surface treated with at least one substance selected from flame retardants, antibacterial agents, mildew-proofing agents, termite-controlling agents, water repellants, and paints, and then coated or impregnated with silicone emulsion composition comprising the following components (A) to (E) emulsified and dispersed in water in the presence of a surfactant:

   (A) 100 parts by weight of organopolysiloxane having at least two silicon-bonded hydroxyl groups per molecule;
   (B) 0.5 to 20 parts by weight of compound obtainable as the reaction product of amino-containing organoalkoxysilane and acid anhydride;
   (C) 0 to 20 parts by weight of epoxy-containing organoalkoxysilane and/or a partial hydrolysate thereof;
   (D) 0 to 50 parts by weight of colloidal silica and/or polysilsesquioxane, and
   (E) 0 to 10 parts by weight of curing catalyst.

2. A modified wood of claim 1 wherein said flame retardant, antibacterial agent, mildew-proofing agent or termite-controlling agent is at least one selected from boron compounds and phosphorous compounds.

3. A modified wood of claim 2 wherein the compound selected from boron compounds and phosphorous compounds

is at least one selected from boric acid, borax, borates, trialkyl borates, phosphates, phosphorous acid, trialkyl phosphites, phosphoric acid and trialkyl phosphates.

**4.** A modified wood of any one of claims 1 to 3 wherein the organopolysiloxane of component (A) has the following general formula (1):

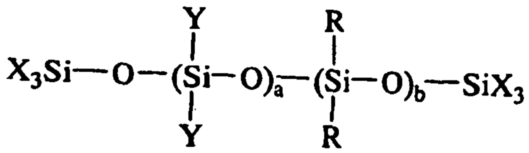

(1)

wherein groups R, which may be the same or different, are $C_1$-$C_{20}$ alkyl group or $C_6$-$C_{20}$ aryl group; groups X which may be the same or different are $C_1$-$C_{20}$ alkyl group, $C_6$-$C_{20}$ aryl group, $C_1$-$C_{20}$ alkoxy group or hydroxyl group; groups Y which may be the same or different are selected from the options for X and group $-[O-Si(X)_2]_c-X$, the subscript a is a number of 0 to 1,000, b is a positive number of 100 to 10,000, and c is a positive number of 1 to 1,000.

**5.** A modified wood of any one of claims 1 to 4 wherein component (B) is the reaction product of an amino-containing organoalkoxysilane having the following general formula (2):

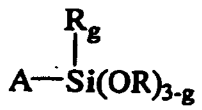

(2)

wherein R is as defined for formula (1) in claim 4, A is an amino-containing group of the formula $-R^1(NHR^1)_hNHR^2$ wherein each $R^1$ independently is a divalent hydrocarbon group such as $C_1$-$C_6$ alkylene, $R^2$ is R or hydrogen, h is an integer of 0 to 6, and g is 0, 1 or 2, and an acid anhydride selected from maleic anhydride, phthalic anhydride, succinic anhydride, methylsuccinic anhydride, glutaric anhydride, and itaconic anhydride.

**6.** A modified wood of any one of claims 1 to 5 wherein component (C) is present in an amount of 0.5 to 20 parts by weight per 100 parts by weight of component (A).

**7.** A modified wood of any one of claims 1 to 6 wherein component (D) is present in an amount of 1 to 50 parts by weight per 100 parts by weight of component (A).

**8.** A modified wood of any one of claims 1 to 7 wherein the curing catalyst is a metal salt of an organic acid or an amine compound and is present in an amount of 0.5 to 5 parts by weight per 100 parts by weight of component (A).

**9.** A method of preparing a modified wood according to any one of claims 1 to 8, comprising treating wood with said at least one substance and then coating or impregnating the wood with the emulsion composition.

**Patentansprüche**

**1.** Modifiziertes Holz, das innen oder auf der Oberfläche mit zumindest einer aus Flammhemmern, antibakteriellen Mitteln, Schimmelschutzmitteln, Termitenbekämpfungsmitteln, wasserabweisenden Mitteln und Farben ausgewählten Substanz behandelt und anschließend mit einer Siliconemulsionszusammensetzung, die die folgenden, in Gegenwart eines Tensids in Wasser emulgierten und dispergierten Komponenten (A) bis (E) umfasst, beschichtet oder imprägniert worden ist:

(A) 100 Gewichtsteile Organopolysiloxan mit zumindest zwei an Siliciumatome gebundenen Hydroxylgruppen pro Molekül;
(B) 0,5 bis 20 Gewichtsteile einer Verbindung, die als Reaktionsprodukt von aminohältigem Organoalkoxysilan

und Säureanhydrid erhältlich ist;
(C) 0 bis 20 Gewichtsteile epoxyhältiges Organoalkoxysilan und/oder ein partielles Hydrolysat davon;
(D) 0 bis 50 Gewichtsteile kolloidale Kieselsäure und/oder Polysilsesquioxan; und
(E) 0 bis 10 Gewichtsteile eines Härtungskatalysators.

2. Modifiziertes Holz nach Anspruch 1, worin der Flammhemmer, das antibakterielle Mittel, das Schimmelschutzmittel oder das Termitenbekämpfungsmittel zumindest eine aus Bor- und Phosphorverbindungen ausgewählte Verbindung ist.

3. Modifiziertes Holz nach Anspruch 2, worin die aus Bor- und Phosphorverbindungen ausgewählte Verbindung zumindest eine aus Borsäure, Borax, Boraten, Trialkylboraten, Phosphaten, phosphoriger Säure, Trialkylphosphiten, Phosphorsäure und Trialkylphosphaten ausgewählte Verbindung ist.

4. Modifiziertes Holz nach einem der Ansprüche 1 bis 3, worin das Organopolysiloxan der Komponente (A) folgende allgemeine Formel (1) hat:

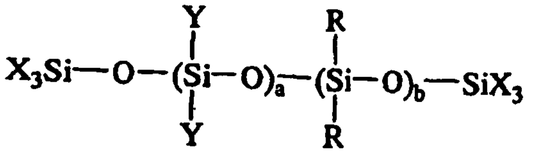

(1)

worin die Gruppen R, die gleich oder unterschiedlich sein können, $C_1$-$C_{20}$-Alkylgruppen oder $C_6$-$C_{20}$-Arylgruppen sind; die Gruppen X, die gleich oder unterschiedlich sein können, $C_1$-$C_{20}$-Alkylgruppen, $C_6$-$C_{20}$-Arylgruppen, $C_1$-$C_{20}$-Alkoxygruppen oder Hydroxylgruppen sind; die Gruppen Y, die gleich oder unterschiedlich sein können, aus den Optionen für X und der Gruppe $-[O-Si(X)_2]_c-X$ ausgewählt sind; der Index a eine Zahl von 0 bis 1.000 ist; b eine positive Zahl von 100 bis 10.000 ist; und c eine positive Zahl von 1 bis 1.000 ist.

5. Modifiziertes Holz nach einem der Ansprüche 1 bis 4, worin Komponente (B) das Reaktionsprodukt eines aminohältigen Organoalkoxysilans der folgenden allgemeinen Formel (2):

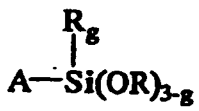

(2)

worin R wie in Formel (1) in Anspruch 4 definiert ist, A eine aminohältige Gruppe der Formel $-R^1(NHR^1)_hNHR^2$ ist, worin die Gruppen $R^1$ jeweils unabhängig voneinander zweiwertige Kohlenwasserstoffgruppen, wie z.B. $C_1$-$C_6$-Alkylen, sind, $R^2$ R oder Wasserstoff ist, h eine ganze Zahl von 0 bis 6 ist und g = 0, 1 oder 2 ist, und eines Säureanhydrids ist, das aus Maleinsäureanhydrid, Phthalsäureanhydrid, Bernsteinsäureanhydrid, Methylbernsteinsäureanhydrid, Glutarsäureanhydrid und Itaconsäureanhydrid ausgewählt ist.

6. Modifiziertes Holz nach einem der Ansprüche 1 bis 5, worin Komponente (C) in einer Menge von 0,5 bis 20 Gewichtsteilen pro 100 Gewichtsteile von Komponente (A) vorhanden ist.

7. Modifiziertes Holz nach einem der Ansprüche 1 bis 6, worin Komponente (D) in einer Menge von 1 bis 50 Gewichtsteilen pro 100 Gewichtsteile von Komponente (A) vorhanden ist.

8. Modifiziertes Holz nach einem der Ansprüche 1 bis 7, worin der Härtungskatalysator ein Metallsalz einer organischen Säure oder eine Aminverbindung ist und in einer Menge von 0,5 bis 5 Gewichtsteilen pro 100 Gewichtsteile von Komponente (A) vorhanden ist.

9. Verfahren zur Herstellung von modifiziertem Holz nach einem der Ansprüche 1 bis 8, umfassend die Behandlung

des Holzes mit der zumindest einen Substanz und die anschließende Beschichtung oder Imprägnierung des Holzes mit der Emulsionszusammensetzung.

## Revendications

**1.** Bois amélioré, qui a été traité intérieurement ou en surface avec au moins une substance choisie parmi des ignifuges, des agents antibactériens, des agents résistant à la moisissure, des agents de régulation des termites, des hydrofuges et des peintures, puis revêtu ou imprégné d'une composition d'émulsion de silicone comprenant les composants

(A) à (E) suivants émulsifiés et dispersés dans de l'eau en présence d'un agent tensioactif :
(A) 100 parties en poids d'organopolysiloxane ayant au moins deux groupes hydroxyle liés au silicium par molécule ;
(B) 0,5 à 20 parties en poids de composé pouvant être obtenu en tant que produit de réaction d'organoalcoxysilane contenant un groupe amino et d'anhydride acide ;
(C) 0 à 20 parties en poids d'organoalcoxysilane contenant un époxy et/ou un hydrolysat partiel de celui-ci ;
(D) 0 à 50 parties en poids de silice colloïdale et/ou de poly(silsesquioxane), et
(E) 0 à 10 parties en poids de catalyseur de durcissement.

**2.** Bois amélioré selon la revendication 1, dans lequel lesdits ignifuge, agent antibactérien, agent résistant à la moisissure ou agent de régulation des termites sont au moins un élément choisi parmi des composés de bore et des composés de phosphore.

**3.** Bois amélioré selon la revendication 2, dans lequel le composé choisi parmi les composés de bore et les composés de phosphore est au moins un élément choisi parmi l'acide borique, le borax, les borates, les borates de trialkyle, les phosphates, l'acide phosphoreux, les phosphites de trialkyle, l'acide phosphorique et les phosphates de trialkyle.

**4.** Bois amélioré selon l'une quelconque des revendications 1 à 3, dans lequel l'organopolysiloxane de composant (A) a la formule générale (1) suivante :

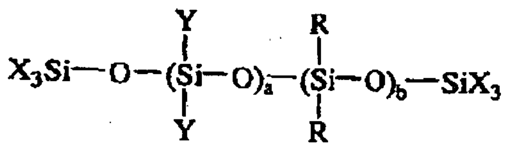

(1)

dans laquelle les groupes R, qui peuvent être identiques ou différents, sont un groupe alkyle en $C_1$ à $C_{20}$ ou un groupe aryle en $C_6$ à $C_{20}$ ; les groupes X qui peuvent être identiques ou différents sont un groupe alkyle en $C_1$ à $C_{20}$, un groupe aryle en $C_6$ à $C_{20}$, un groupe alcoxy en $C_1$ à $C_{20}$ ou un groupe hydroxyle ; les groupes Y qui peuvent être identiques ou différents sont choisis parmi les options pour X et le groupe $-[O-Si(X)_2]_c-X$, l'indice a est un nombre de 0 à 1 000, b est un nombre positif de 100 à 10 000 et c est un nombre positif de 1 à 1 000.

**5.** Bois amélioré selon l'une quelconque des revendications 1 à 4, dans lequel le composant (B) est le produit de réaction d'un organoalcoxysilane contenant un groupe amino ayant la formule générale (2) suivante :



(2)

dans laquelle R est tel que défini pour la formule (1) dans la revendication 4, A est un groupe contenant un groupe amino de la formule $-R^1(NHR^1)_hNHR^2$, dans laquelle chaque $R^1$ est indépendamment un groupe hydrocarbure

divalent tel qu'un alkylène en $C_1$ à $C_6$, $R^2$ est R ou un atome d'hydrogène, h est un entier de 0 à 6, et g vaut 0, 1 ou 2, et un anhydride acide choisi parmi l'anhydride maléique, l'anhydride phtalique, l'anhydride succinique, l'anhydride méthylsuccinique, l'anhydride glutarique et l'anhydride itaconique.

**6.** Bois amélioré selon l'une quelconque des revendications 1 à 5, dans lequel le composant (C) est présent en une quantité de 0,5 à 20 parties en poids pour 100 parties en poids de composant (A).

**7.** Bois amélioré selon l'une quelconque des revendications 1 à 6, dans lequel le composant (D) est présent en une quantité de 1 à 50 parties en poids pour 100 parties en poids de composant (A).

**8.** Bois amélioré selon l'une quelconque des revendications 1 à 7, dans lequel le catalyseur de durcissement est un sel de métal d'un acide organique ou un composé amine et est présent en une quantité de 0,5 à 5 parties en poids pour 100 parties en poids de composant (A).

**9.** Procédé de préparation d'un bois amélioré selon l'une quelconque des revendications 1 à 8, comprenant le traitement du bois avec ladite au moins une substance puis le revêtement de l'imprégnation du bois avec la composition d'émulsion.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 56004408 A
- JP 63265601 A
- JP 54110234 A
- JP 60255866 A
- JP 55118044 A
- JP 5069412 A
- JP 4307204 A